# FASCICULE DE BREVET EUROPEEN

(11) **EP 1 853 481 B1**
(45) Date de publication et mention de la délivrance du brevet: **27.05.2009**
(21) Numéro de dépôt: 06709417.7
(22) Date de dépôt: 20.01.2006
(51) Int. Cl.: B64D 37/32, B01D 53/88

(54) **SYSTEME D'INERTAGE DE COMPARTIMENT DE VEHICULE AUTOMOTEUR, NOTAMMENT AERONEF**
SYSTEM ZUR INERTISIERUNG EINER KABINE EINES SELBSTFAHRENDEN FAHRZEUGS, BESONDERS EINES FLUGZEUGS
SYSTEM FOR INERTING A COMPARTMENT OF A SELF-PROPELLED VEHICLE, ESPECIALLY AN AIRCRAFT

(30) Priorité: 16.02.2005 FR 0550439
(43) Date de publication de la demande: 14.11.2007
(73) Titulaire: L'AIR LIQUIDE, Société Anonyme pour l'Etude et l'Exploitation des Procédés Georges Claude, 75321 Paris Cedex 07 (FR)
(72) Inventeur: LESSI, Stéphane, Newark, DE 19711 (US); VANDROUX, Olivier, F-38000 Grenoble (FR)
(74) Mandataire: De Cuenca, Emmanuel Jaime
(86) Numéro de dépôt international: PCT/FR2006/050032
(87) Numéro de publication internationale: WO 2006/087486

(56) Documents cités:
- FR-A- 2 248 710
- US-A- 5 252 299
- US-A1- 2002 141 912
- US-A1- 2004 065 383

## Description

La présente invention concerne les systèmes d'inertage de compartiments de véhicules automoteurs, du type comprenant, entre une extrémité d'entrée connectable à une source d'air comprimé du véhicule et au moins une sortie connectable au compartiment à inerter, au moins un dispositif de séparation de gaz de l'air.

Le document US2004/065383 A1 décrit un système d'inertage conforme au préambule de la revendication 1 dans lequel est prévu un dispositif de filtrage de particules du type coalescent.

Le document US-A-5 252 299 décrit un purificateur d'air utilisant une structure catalytique en spiral (avec platine).

Les véhicules automoteurs, notamment les automobiles et les aéronefs, sont fréquemment exploités dans des environnements particulièrement pollués, l'atmosphère environnante étant riche en particules et en composés organiques volatils désignés le plus fréquemment sous l'appellation anglo-saxonne VOC (Volatile Organic Compounds). Or, les dispositifs de séparation de gaz de l'air en général, et les dispositifs embarqués en particulier, notamment les dispositifs à membrane de perméation, sont sensibles également à ces polluants qui en réduisent rapidement l'efficacité et / ou la durée de vie.

La présente invention (comme definie par les caractéristiques de la revendication 1) a pour objet de proposer un système d'inertage du type défini plus haut permettant, en respectant les paramètres de poids et d'encombrement requis pour les matériels embarqués, de filtrer de façon adéquate les polluants présents dans l'air environnant, en particulier les polluants en phase vapeur, et donc d'augmenter considérablement la durée de vie du système d'inertage.

Pour ce faire, selon une caractéristique de l'invention, le système d'inertage comprend, entre l'extrémité d'entrée d'air comprimé et le dispositif de séparation de gaz de l'air, un dispositif de filtrage comprenant au moins une section de catalyse pour la décomposition des polluants, notamment organiques, éventuellement présents en phase vapeur dans l'air comprimé.

Selon d'autres caractéristiques particulières de l'invention :
- la section de catalyse comprend une structure alvéolaire supportant au moins une couche d'un métal précieux catalytique
- le système comprend, entre le dispositif de filtrage et le dispositif de séparation, un dispositif refroidisseur de l'air comprimé filtré
- le dispositif de filtrage comporte en outre au moins une section de filtrage particulaire, typiquement HEPA (High Efficiency Particule Arrest)
- le dispositif de filtrage comporte des moyens de chauffage de la section de catalyse
- le dispositif de séparation est du type à membrane polymère
- le compartiment à inerter est un réservoir de carburant ; et
- le véhicule est un aéronef

L'invention concerne également un aéronef pourvu d'un tel système d'inertage.

D'autres caractéristiques et avantages de l'invention ressortiront de la description suivante de modes de réalisation, donnés à titre illustratif mais nullement limitatif, faite en relation avec les dessins annexés, sur lesquels :
- la figure 1 est une vue schématique d'un mode de réalisation d'un système d'inertage de réservoir de carburant d'aéronef selon l'invention ; et
- la figure 2 est une vue schématique partiellement en coupe d'un dispositif de filtrage utilisé dans le système d'inertage selon l'invention.

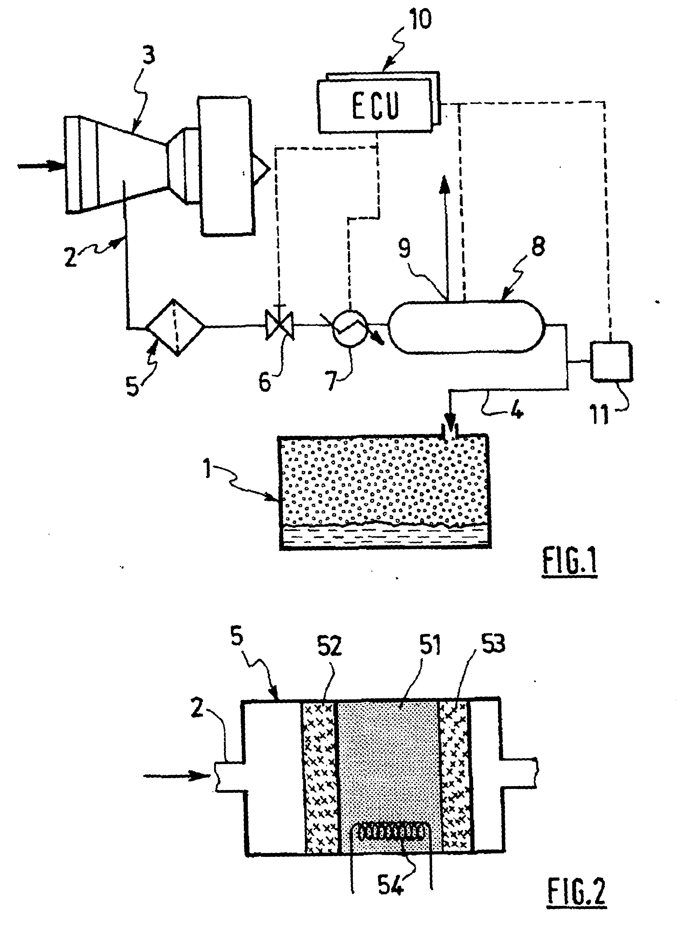

Dans le mode de réalisation particulier représenté sur la figure 1, relatif à l'inertage d'un réservoir 1 de carburant d'un aéronef, civil ou militaire (non représenté), à un système d'inertage selon l'invention comprend une ligne de production de mélange gazeux appauvri en oxygène entre une extrémité d'entrée 2 reliée à un étage de compression d'une turbo machine 3 de propulsion de l'aéronef, et une extrémité de sortie 4 d'azote impur débouchant dans le ciel gazeux du réservoir 1.

La ligne comprend, d'amont en aval, un dispositif de filtrage 5, une électrovanne de réglage de débit 6, échangeur de chaleur / refroidisseur 7 et un dispositif 8 de séparation de constituants de gaz de l'air, typiquement constitué de faisceaux de fibres polymères capables de séparer l'azote de l'oxygène de l'air et fournissant dans la sortie 4 un mélange gazeux très appauvri en oxygène. Le dispositif de séparation 8 comporte en outre une sortie 9 de mélange gazeux enrichi en oxygène rejeté dans l'atmosphère environnante ou exploité dans des systèmes de conditionnement d'air ou de combustion.

Le système d'inertage comporte en outre une unité électronique centrale de contrôle 10 reliée fonctionnellement à l'électrovanne 6 à l'échangeur 7 et à un capteur 11 de teneur en oxygène résiduaire dans l'extrémité de sortie 4.

Selon un aspect de l'invention, le dispositif de filtrage 5 comporte une section 51 de catalyse comprenant un moins un métal précieux catalytique, typiquement du platine, éventuellement du palladium ou du rhodium, déposé sur un support métallique poreux et/ou alvéolé, par exemple de type nid d'abeille, afin de réaliser la décomposition à chaud des VOC en dioxyde de carbone et eau. Le dispositif de filtrage 5 comporte en outre au moins une, avantageusement deux sections de filtrage HEPA 52, 53, avantageusement du type à feutre en fibres de verres plissé afin d'arrêter les particules en amont et en aval de la section de catalyse 51.

Pour l'application aux véhicules à turbo machine, notamment les aéronefs, le dispositif selon l'invention tire avantageusement profit des températures d'air comprimé relativement élevées (généralement disponibles entre 180°C et 250°C), en sortie d'étage de compression de la turbo machine 3 ce qui favorise l'activité du catalyseur et le rendement de conversion des polluants. En variante, pour améliorer encore l'efficacité de la section de catalyse 51, on peut prévoir un dispositif de chauffage supplémentaire 54, électrique ou du type échangeur à gaz chaud en provenance de la turbo machine, associé à la section de catalyse, dans cette dernière, comme représenté, ou autour, dans un manchon chauffant. Le refroidisseur 7, exploitant typiquement une circulation à contre-courant d'air ambiant, est dimensionné pour ramener la température de l'air comprimé filtré à l'envers du séparateur 8 à une valeur n'excédant pas 80°C.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Aéronef pourvue d'un système d'inertage de compartiment de véhicule automoteur comprenant, entre une extrémité d'entrée (2) à une source d'air comprimé (3) de l'aéronef constituée d'un étage de compression d'une turbo machine (3) de propulsion de l'aéronef et au moins une sortie (4) connectée au compartiment à inerter le compartiment à inerter étant un réservoir de carburant (1), au moins un dispositif de séparation de gaz de l'air, **caractérisé en ce qu'**il comprend, entre l'extrémité d'entrée (2) et le dispositif de séparation (8) un dispositif de filtrage (5) connecté directement à la source d'air comprimé de l'aéronef et comprenant au moins une section de catalyse (51) pour la décomposition de polluants éventuellement présents en phase vapeur dans l'air comprimé.

2. Aéronef selon la revendication 1, **caractérisé en ce que** la section de catalyse (51) comprend une structure alvéolaire supportant au moins une couche d'un métal précieux catalytique.

3. Aéronef selon l'une des revendications précédentes, **caractérisé en ce que** le dispositif de filtrage (5) comporte en outre au moins une section (52, 53) de filtrage particulaire.

4. Aéronef selon l'une des revendications précédentes, **caractérisé en ce qu'**il comprend, entre le dispositif de filtrage (5) et le dispositif de séparation (8), un dispositif (7) refroidisseur de l'air comprimé filtré.

5. Aéronef selon l'une des revendications précédentes, **caractérisé en ce que** le dispositif de séparation (8) est du type à membranes polymères.

6. Aéronef selon l'une des revendications précédentes, **caractérisé en ce que** le dispositif de filtrage (5) comporte des moyens (54) de chauffage de la section de catalyse (51).

## Claims

1. Aircraft provided with a system for inerting a compartment of a self-propelled vehicle comprising, between an inlet end (2) connected to a compressed air source (3) belonging to the aircraft, consisting of a compression stage of a turbomachine (3) used for aircraft propulsion, and at least one outlet (4) connected to the compartment that is to be inerted, the compartment to be inerted being a fuel tank (1), at least one device for separating the gas in the air, **characterized in that** it comprises, between the inlet end (2) and the separation device (8), a filtering device (5) connected directly to the compressed air source of the aircraft and comprising at least one catalysis section (51) for breaking down any contaminants that might be present, in vapour phase, in the compressed air.

2. Aircraft according to Claim 1, **characterized in that** the catalysis section (51) comprises a cellular structure supporting at least one layer of a catalytic precious metal.

3. Aircraft according to either one of the preceding claims, **characterized in that** the filtering device (5) further comprises at least one particulate filtering section (52, 53).

4. Aircraft according to one of the preceding claims, **characterized in that** it comprises, between the filtering device (5) and the separation device (8), a cooling device (7) for cooling the filtered compressed air.

5. Aircraft according to one of the preceding claims, **characterized in that** the separation device (8) is of the polymer membrane type.

6. Aircraft according to one of the preceding claims, **characterized in that** the filtering device (5) comprises means (54) for heating the catalysis section (51).

## Patentansprüche

1. Luftfahrzeug, das mit einem System zur Inertisierung eines Raums eines Fahrzeugs mit Eigenantrieb versehen ist, umfassend, zwischen einem mit einer Druckluftquelle (3) des Luftfahrzeugs, die aus einer Druckstufe eines Turbotriebwerks (3) zum Antrieb des Luftfahrzeugs besteht, verbundenen Einlassende (2) und mindestens einem mit dem zu inertisierenden Raum, wobei es sich bei dem zu inertisierenden Raum um einen Kraftstofftank (1) handelt, verbundenen Auslass (4), mindestens eine Vorrichtung zum Trennen von Gas von Luft, **dadurch gekennzeichnet, dass** es zwischen dem Einlassende (2) und der Trennvorrichtung (8) eine Filtervorrichtung (5) umfasst, die direkt mit der Druckluftquelle des Luftfahrzeugs verbunden ist und mindestens einen Katalyseabschnitt (51) für die Zersetzung von möglicherweise in Dampfphase in der Druckluft vorhandenen Verunreinigungen umfasst.

2. Luftfahrzeug nach Anspruch 1, **dadurch gekennzeichnet, dass** der Katalyseabschnitt (51) eine zellenförmige Struktur aufweist, die mindestens eine katalytische Edelmetallschicht trägt.

3. Luftfahrzeug nach einem der vorhergehenden Ansprüche, **dadurch gekennzeichnet, dass** die Filtervorrichtung (5) des Weiteren mindestens einen Teilchenfilterabschnitt (52, 53) umfasst.

4. Luftfahrzeug nach einem der vorhergehenden Ansprüche, **dadurch gekennzeichnet, dass** es zwischen der Filtervorrichtung (5) und der Trennvorrichtung (8) eine Vorrichtung (7) zur Kühlung von gefilterter Druckluft umfasst.

5. Luftfahrzeug nach einem der vorhergehenden Ansprüche, **dadurch gekennzeichnet, dass** die Trennvorrichtung (8) der Polymermembranart ist.

6. Luftfahrzeug nach einem der vorhergehenden Ansprüche, **dadurch gekennzeichnet, dass** die Filtervorrichtung (5) Mittel (54) zum Erwärmen des Katalyseabschnitts (51) aufweist.
